# EUROPEAN PATENT SPECIFICATION

(11) **EP 0 710 307 B1**
(45) Date of publication and mention of the grant of the patent: **27.08.1997**
(21) Application number: 94923967.7
(22) Date of filing: 19.07.1994
(51) Int. Cl.: E01B 1/00, G01C 21/02, G01S 3/786

(54) **METHOD OF CREATION OF A STAR DATABASE**
VERFAHREN ZUM HERSTELLEN EINER STERNDATENBANK
METHODE DE CREATION D'UNE BASE DE DONNEES SUR LES ETOILES

(30) Priority: 22.07.1993 US 96532
(43) Date of publication of application: 08.05.1996
(73) Proprietor: HONEYWELL INC., Minneapolis Minnesota 55408 (US)
(72) Inventor: BILLING-ROSS, James, A., Glendale, AZ 85308 (US); CRUM, Ray, C., Scottsdale, AZ 85257 (US)
(74) Representative: Rentzsch, Heinz, Dipl.-Ing.
(86) International application number: US9408123
(87) International publication number: WO9503215

(56) References cited:
- US-A- 4 621 329
- US-A- 4 658 361
- AUTOMATIC CONTROL IN AEROSPACE - IFAC SYMPOSIUM, 21 July 1989, TSUKUBA (JAPAN) pages 51 - 58 VAN BEZOOIJEN 'A STAR PATTERN RECOGNITION ALGORITHM FOR AUTONOMOUS ATTITUDE DETERMINATION'
- JOURNAL OF GUIDANCE, CONTROL AND DYNAMICS, vol.16, no.3, June 1993, NEW YORK (USA) pages 498 - 504, XP000394925 VEDDER, J.D. 'STAR TRACKERS, STAR CATALOGS, AND ATTITUDE DETERMINATION: PROBABILISTIC ASPECTS OF SYSTEM DESIGN'
- JOURNAL OF THE BRITISH INTERPLANETARY SOCIETY., vol.46, no.2, February 1993, LONDON GB pages 55 - 60, XP000369828 BATTEN,A.J. 'ISO GROUND ATTITUDE DETERMINATION USING PATTERN RECOGNITION'
- JOURNAL OF GUIDANCE, CONTROL AND DYNAMICS, vol.16, no.3, June 1993, NEW YORK
- (USA) pages 498 - 504, XP000394925 VEDDER, J.D. 'STAR TRACKERS, STAR CATALOGS, AND ATTITUDE DETERMINATION: PROBABILISTIC ASPECTS OF SYSTEM DESIGN'

## Description

The present invention relates to a method of creating a star database for an orbiting spacecraft for use in functions which provide attitude determination.

The spacecraft attitude determination problem is one of determining the orientation (attitude) of the spacecraft with respect to some known reference coordinates. Determination of attitude is required in order provide proper bearing for such missions as examining a particular object of interest with observation equipment (such as a telescope) aboard the spacecraft. The basic attitude problem is solved by determining the location of a known point in space using a sensor and then comparing the location of the point measured in the sensor frame to the location of the same point in a reference coordinate frame (such as a local vertical/local horizontal coordinate frame). If the same point is measured in two different coordinate frames, then the orientation of the two coordinate frames with respect to each other can be solved for mathematically.

The most common reference points used in spacecraft attitude determination are stars as they are relatively fixed in inertial space and are point sources of light which allow for accurate measurements. The stars also well mapped and numerous catalogs of stellar data are available which can be used to build a reference catalog. In order for the attitude determination algorithms to work however, the stars that are observed in the sensor must first be identified so that the corresponding reference vector in the catalog can be located.

Most star catalogs available for use in attitude determination are large and take up a great amount memory. They can contain up to 250,000 stars. In order to reduce memory requirement for the catalog, subcatalogs can be created.

In creating a subcatalog, it is customary to select a certain number of fixed stars and to compile them according to some criteria, most likely the mission of the spacecraft. Also taken into account is the radiation spectrum of the cataloged stars which must fall at least partially within the sensitivity range of the photosensor arrangement. Stars must also have a certain minimum brightness and maintain this brightness as constantly as possible. A system of coordinates may be selected for the subcatalog which is centered in the solar system; for example, in the solar center or in the earth center. The subcatalog of stars will then contain the respective coordinates with respect to the spatial system of coordinates as well as the respective brightness of the star. It is practical to select, if possible, only the brightest stars. However, this may also depend on which segments of the celestial sphere are to be expected in the visual field of the star sensor as a function of the special mission.

Some star catalogs may only contain star information of a particular portion of the celestial sphere. In order for these catalogs to be useful, some apriori information about the orientation of the sensor or spacecraft must be known. These subcatalogs do not take into account the situations where the spacecraft may be lost in space and have no information on its orientation.

Solutions have been developed for the situation when the initial orientation of the satellite is unknown. In one case, stored in the catalog of stars, in addition to data concerning the position of a number of reference stars, is certain information concerning different three-star combinations, the reference star in each case being part of the three-star combination. This information includes the brightness total of these three stars, as well as the surface of the triangle which is in each case defined by them. The same qualities are then determined for respective different combinations of three of the stars observed in the visual field of the star sensor, and are subsequently compared with those stored in the catalog of stars. This method requires high expenditures with respect to storage space and computing operations as a result of the fact that the orientation of the satellite at first may be arbitrary, and therefore the whole informational content of the star sensor as well as of the stored catalog of stars must be used.

Therefore it is an object of the present invention to disclose a method of creating a star database which provides information of the whole celestial sphere, require less memory than other prior art databases, and allows for quick algorithmic searches.

The present invention as defined in claim 1 is a method for creating a star database in a spacecraft. Initially, a catalog of stars of the celestial sphere is provided with a plurality of predetermined features of each of the stars. The star location database is created by establishing bi-directional data pointers between the stars in the catalog for different predetermined features, such as brightness and right ascension. Data pointers may also be established between stars in the database which are adjacent to each other.

A more memory efficient database is created by eliminating certain stars from the catalog. Before the bi-directional data pointers are established between the stars in the catalog, an elimination process removes stars, such as ones below a particular visual magnitude, as well as binary and nebular stars. This process assures that non-useful information is not included in the star database, and that an even distribution of stars is provided over the celestial sphere. Preferred details are defined in the dependent claims.

The invention will be explained by reference to the drawings,

Figure 1 shows a spacecraft with star sensor orbiting the earth and scanning the celestial sphere.

Figure 2 shows a block diagram of the attitude determination system.

Figure 3 shows a flow chart of the database writing process.

Figure 4 shows an example of the bi-direction links between each of the star database entries.

Figure 5 shows a an example of the information carried in each of the database entries and the bi-directional links between the other entries.

Figure 6 is a pair of tables depicting the FOV memory and the star database.

Figure 7 is a pair of tables depicting the FOV memory and the star database.

### PREFERRED EMBODIMENT OF THE INVENTION

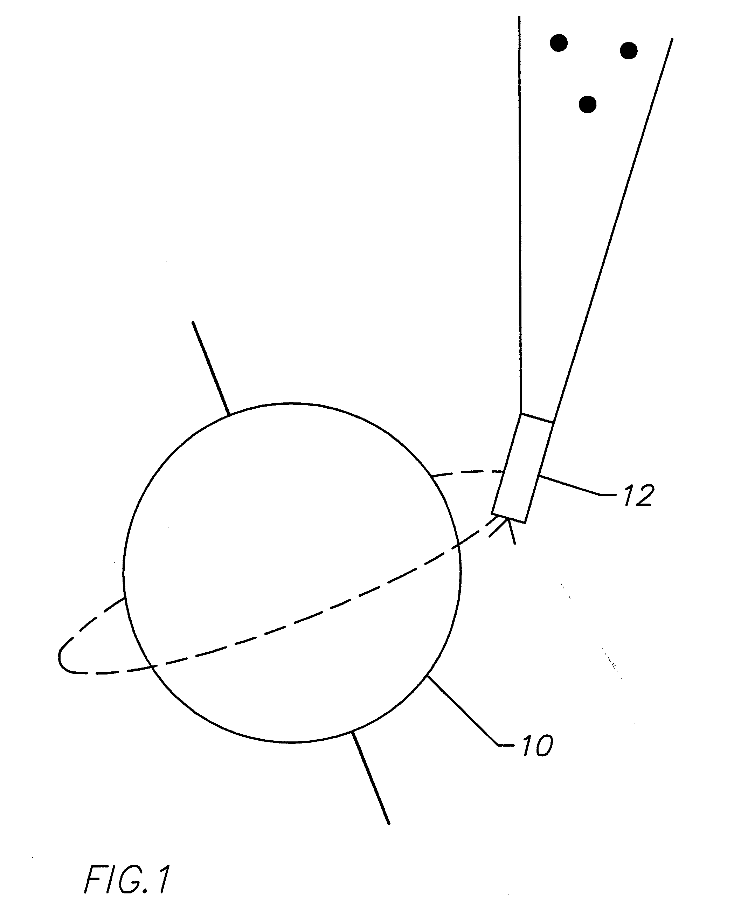

Figure 1 is a diagram of a satellite 12 orbiting the earth 10. The missions of an orbiting satellite may be varied. They are used to monitor events which occur on the earth's surface, as well as monitor movements and events which occur in the celestial sphere around the earth. In order for a satellite to give accurate readings, its attitude with reference to a particular coordinate system must be known.

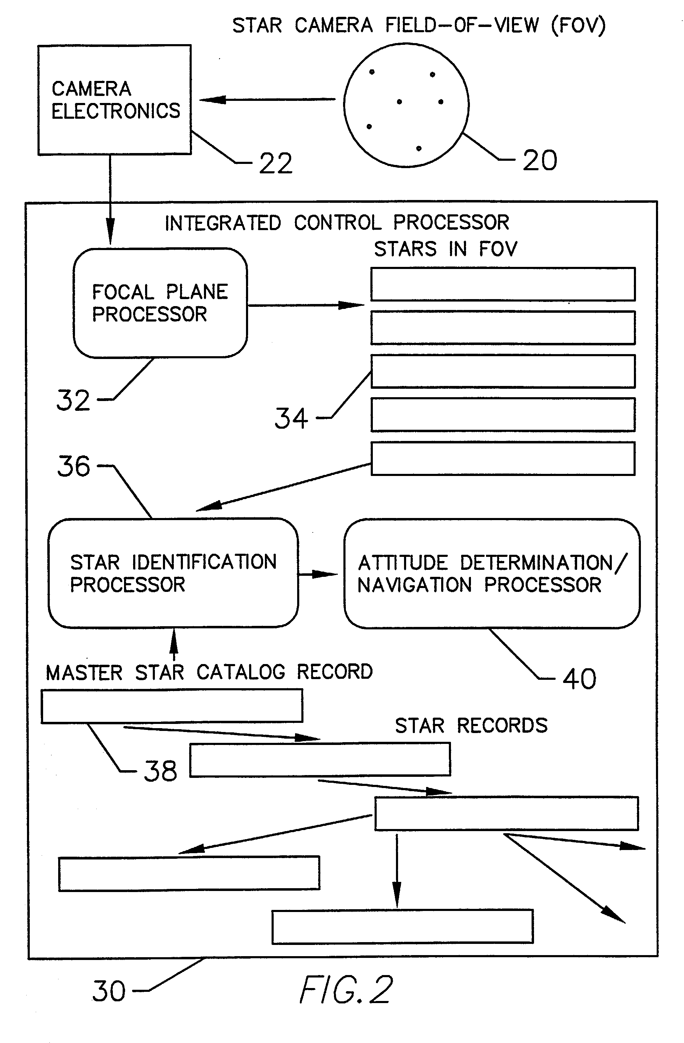

One method of providing attitude correction is through observation of the stars. For the present invention, the system to perform this task is shown in Figure 2. The star camera which scans the celestial sphere provides a field of view (FOW) image 20 which is transmitted to the camera electronics 22. In the camera electronics 22, the field of view image is converted to an electronic signal. This electronic signal is then transmitted to the integrated control processor 30. Within the processor 30 the image signal is transmitted to the focal plane processor 32. In the focal plane processor 32, the visual signal is adjusted to take into account the characteristics of the camera optics and the two-dimensional CCD array. The corrected visual image is then transmitted to the memory 34 which stores all stars which appeared in the field of view. This field of view memory 34 is connected to the star identification processor 36. Also connected to the processor 36 is the star database 38. From the star processor 36 the signal is transmitted to the attitude determination/navigation processor 40, which provides the attitude adjustments for the spacecraft.

In its simplest form, the star database 38 stores characteristic information of the stars which appear in the celestial sphere. This data is compared to the information stored in the memory 34 to identify the stars which appear in the star camera field of view. Once the stars are identified, and the star camera direction is taken into account, the attitude of the spacecraft can be calculated.

A method has been formulated to construct a star database which when built, requires a minimum amount of memory and can be searched at a great speed. It is known that star catalogs are available which contain great amounts of information about the stars which appear above the earth. Two such catalogs are the basic FK5 Star Catalog and the SAO Catalog. In the basic FK5 Catalog, mean positions and proper motions for the 1535 Classical Fundamental Stars have been included. The machine version of the catalog contains positions and proper motions of the basic FK5 stars for the epochs and equinoxes J2000.0 and B1950.0, the mean epochs of individual observe right ascensions and declinations used to determine the final positions, and the mean errors of the final positions and proper motions for the reported epochs. Because of the linear structure of the catalog, its use in attitude in determination can be both time consuming and inefficient.

In order to avoid a brute force search of a star database, it is more efficient to provide links between the star entries in the database according to particular characteristics. For example, bi-directional data pointers can link different star entries together according to such criteria as brightness, right ascension, and location. Such an interconnected database would allow a quick search of all the stars according to a characteristic such as brightness, and then provide a quick search of stars which surround this first star so that angular measurements can be made for star identification.

In order to further speed the search, certain entries in the star catalog can be eliminated. For example, stars below a certain visual magnitude can be eliminated. Also, in order to provide good point source stars which are evenly distributed about the celestial sphere, binary, variable, and nebular stars are not included in the database.

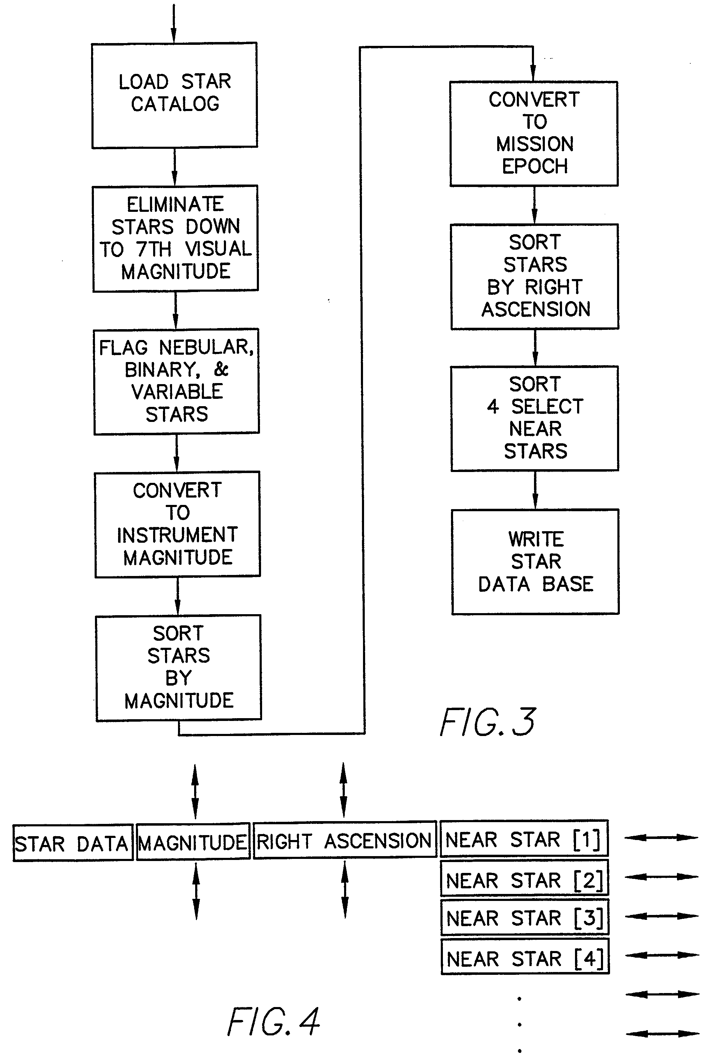

The steps required to create the star database from the star catalog are shown in Figure 3. The first step in the process is to receive the star catalog with all the star entries. Depending on the catalog used, there may be a few hundred thousand stars included all the way down to the tenth visual magnitude. In order to create a database of manageable size, all stars down to the seventh visual magnitude are eliminated. The choice of the seventh visual magnitude is merely one embodiment and is not meant to limit the invention in any way. As described above, in order to provide a uniform distribution of stars throughout the celestial sphere, nebular, binary, and various stars are flagged and are not used in the acquisition process. Once a number of stars to be used in the database is established, the spectral data of each star entry is converted to instrument magnitude based on CCD spectrum and star color.

Each star entry in the star catalog contains values for brightness, as well as its right ascension and declination based on some reference point, such as the earth. With this type of feature information, the star entries can be linked via the relative magnitudes of the features. In this embodiment of the invention, bi-directional data pointers are provided between each star in descending and ascending order of brightness. For example, the brightest star from the star catalog will have a data pointer which points to the second brightest star in the star catalog. In turn, the second brightest star will have a pointer which points to the first brightest star, as well as the third brightest star. In order to create a circular database, the brightest star and the least brightest star both have data pointers to each other. For example, the least brightest star has a data pointer which points to the second least brightest star as well as the brightest star.

At this point, the right ascension and declination of the stars in the star catalog are converted to mission epochs, for example 1995. Bi-directional data links are then established between the star entries for right ascension in a similar fashion as was done for brightness. Each star is linked to the one above it in right ascension as well as the one right below it in right ascension. These bi-directional links provide a circular database when searching by right ascension.

The final step in the preparation of the database is to create data links between each of the stars in the star catalog and each of its neighboring stars as they appear in the sky. These data links allow for easy searches of a particular portions of the celestial sphere. In this embodiment of the invention, data links are provided between each star and five of its closest neighbors. The number of data links to stars is a design criteria which is controlled either by precision or memory space. Once the data links are established according to brightness, right ascension, and location, the star base is then written into memory.

Figure 4 is a diagram of the connections between the star entries and the star database. The bi-directional pointers connect each star in the database to the other stars according to magnitude, right ascension, as well as adjacent location.

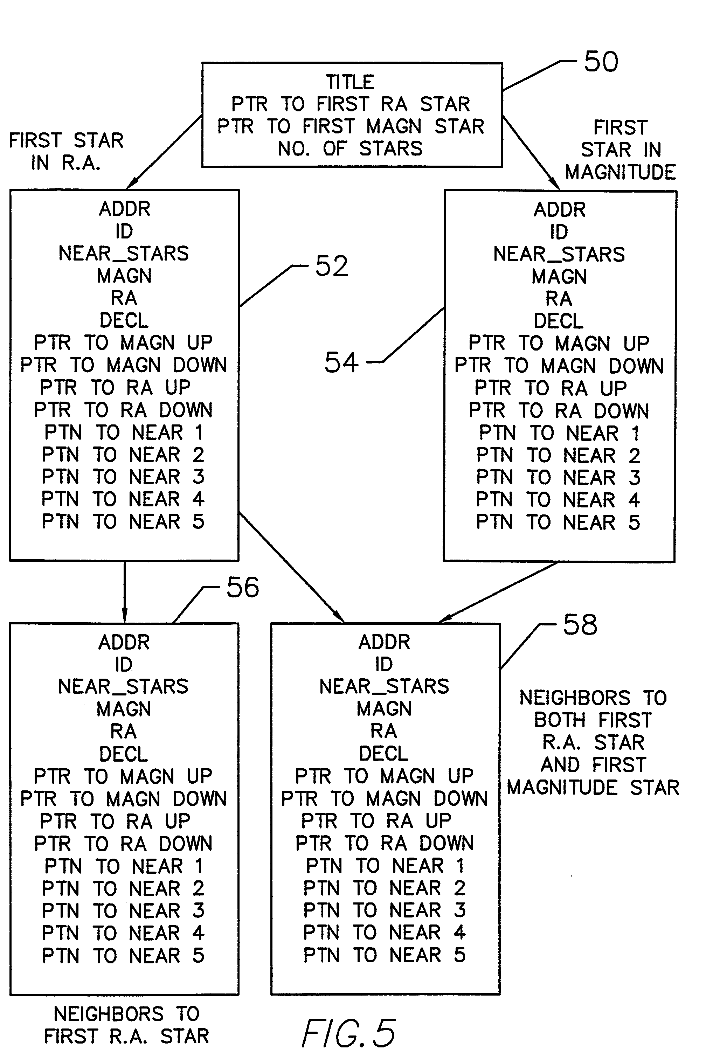

Figure 5 shows the connections between an example group of star entries in the database. The master record 50 provides links to the brightest star and the star at minimum right ascension, as well as a dynamic link to the current star being accessed. This reference also provides the number of stars contained in the database. The master record 50 has pointers to both the first star in right ascension 52 and the first star in magnitude 54. As can be seen, each star entry contains an address, an I.D. near star reference, a brightness magnitude, a right ascension, a declination, a pointer to the star with a brightness which is next highest, a pointer to the star with a magnitude brightness which is next lowest, a pointer to the star just above in right ascension, a pointer to the star just below in right ascension, and a series of pointers to stars which are near in location. As an example, the pointer between the first star in right ascension 52 and the neighbor to the first star in right ascension 56 is shown. Also shown is the connection between the right star in first ascension 52 to its neighbor 58, which is also a neighbor to the first star in magnitude 54.

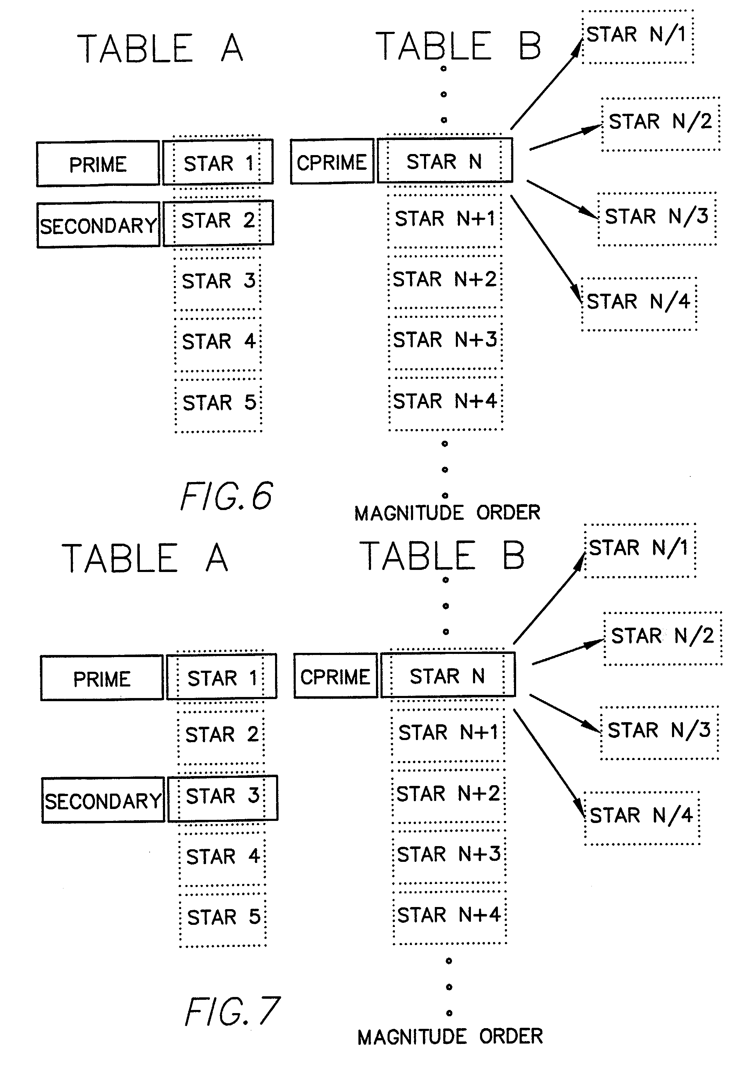

Once a database has been established and all the connections are made, a search can now be performed. The method of searching the database can be better understood by reference to Tables A and B in Figures 6 and 7. Tables A and B are simple representations of the memories 34 and 38 respectively. To begin the process of star acquisition and identification, the brightest star in the FOV is located. In memory 34 this brightest star is stored in Table A and is labeled as the prime star. The next brightest star in the FOV is located and stored in Table A as the secondary star. At this point, a search is performed of the database. Table B represents the information stored and linked in the star database according to brightness and location. Once a star which matches the brightness of the prime star is located in Table B, it is labeled as cprime. As is seen in Figure 7, star n which has been labeled as cprime has its bi-directional data connections between adjacent stars which in this case are labeled as star n/1, star n/2, star n/3 and star n/4.

The next step in the identification process is to search the adjacent stars of cprime to find matches with the angle and magnitude which has been found between the prime and secondary stars. The stars which are found to match are labeled alpha stars. All alpha matches are then stored. Once the alpha matches are found, The secondary designation in Table A is moved down to the third brightest star and the angle between the prime and new secondary star is determined. In the database, shown in Table B, a new search is performed to find a neighboring star of cprime which matches the brightness and angle of the new secondary star. Once matches are found in Table B they are labeled as the beta stars.

With the beta stars found, a comparison is then made between the alpha and beta stars. If an alpha beta match is found in Table B, which matches a comparison between the secondary and new secondary star in Table A, then the star identification has been successful.

Below is a pseudo-pascal code fragment. This software contains the steps necessary to perform the search of the database as well as some additional logic for when a star identification is unsuccessful.

As the process begins, the first three stars in the field of view have been located in order of descending brightness. The portion of code below begins the search and finds the cprime candidate in the database which matches the brightness of the brightest star in the field of view:

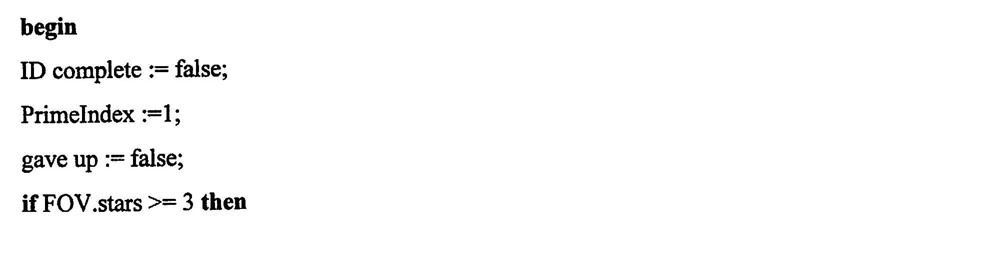

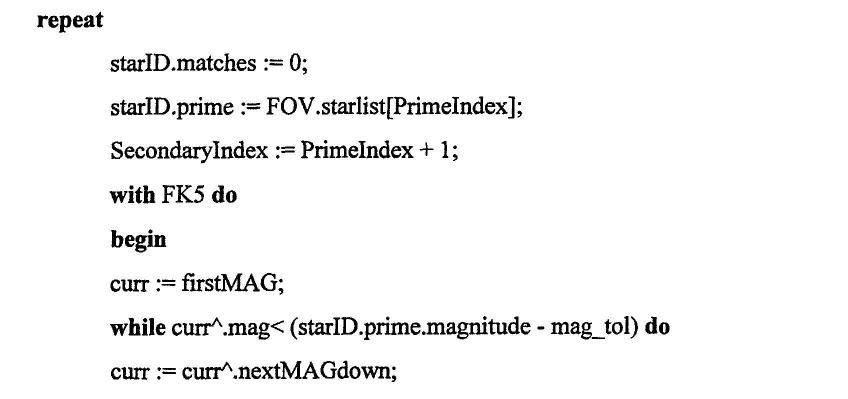

In the next sequence of code, the cprime candidate has already been located and the search is made to locate all the adjacent stars:

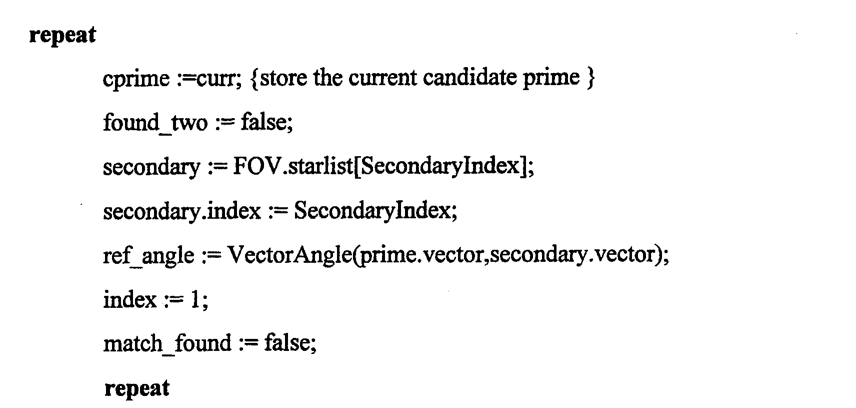

Once the adjacent stars are located, an angle and magnitude comparison is made between cprime and its neighbor against the prime/secondary combination:

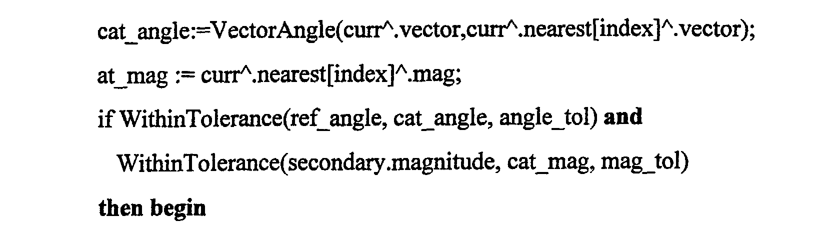

Any matches made are stored and the alpha/beta angle checks are then performed:

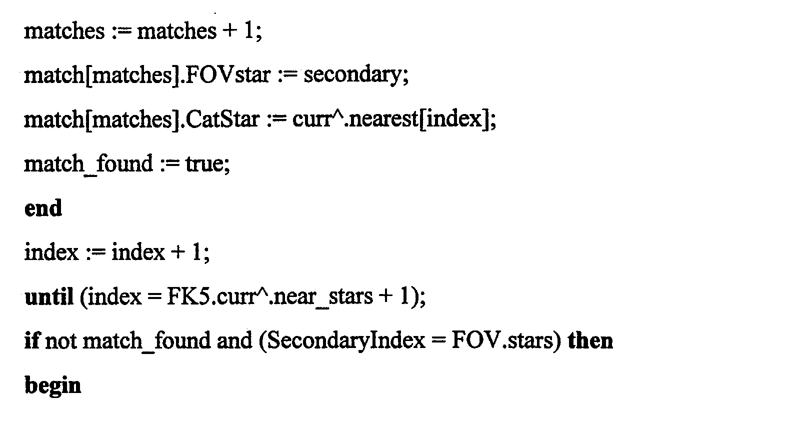

In one possible scenario, no matches between the prime and other stars in the FOV is found. This probably indicates that the current cprime is not a good candidate, so the cprime designation is moved down to the next star in the catalog and tried again:

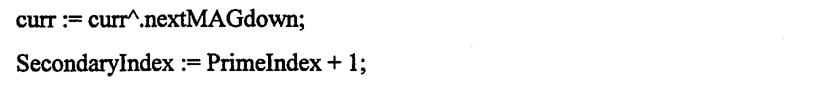

The new cprime is then checked to see if it has any stars within the FOV radius:

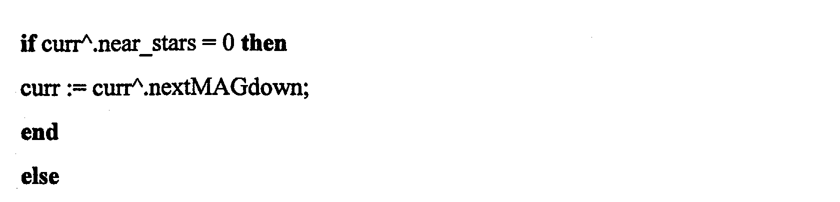

In another scenario, no matches are found between the current prime and the current secondary. Since all stars in the FOV have not been tried, the secondary is set and retried again:
Secondary Index := SecondaryIndex + 1;

The number of alpha beta matches is checked and if you find two matches the loop is exited. The loop is also exited if the prime candidate magnitude is too different from the prime to be plausible:

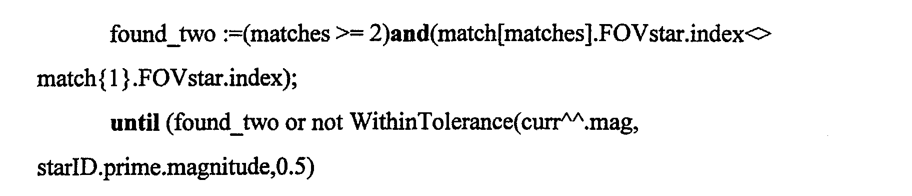

If there is success in finding alpha and beta stars which match angles with the prime, the alpha and beta stars are then checked against each other for the triad:

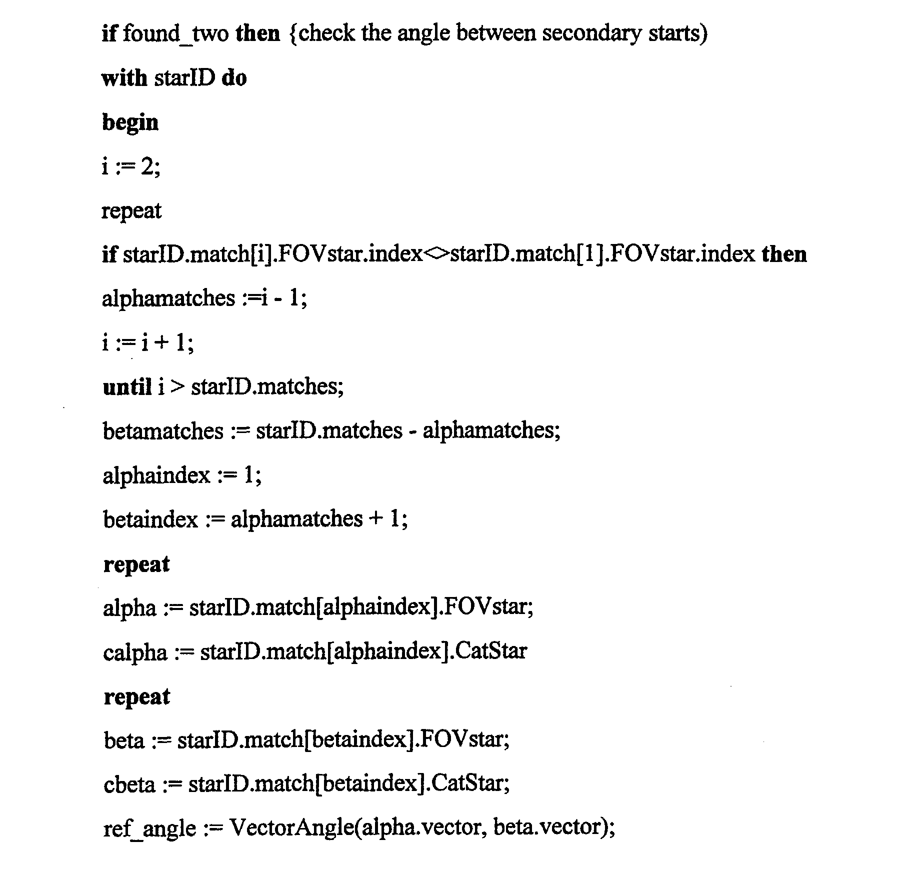

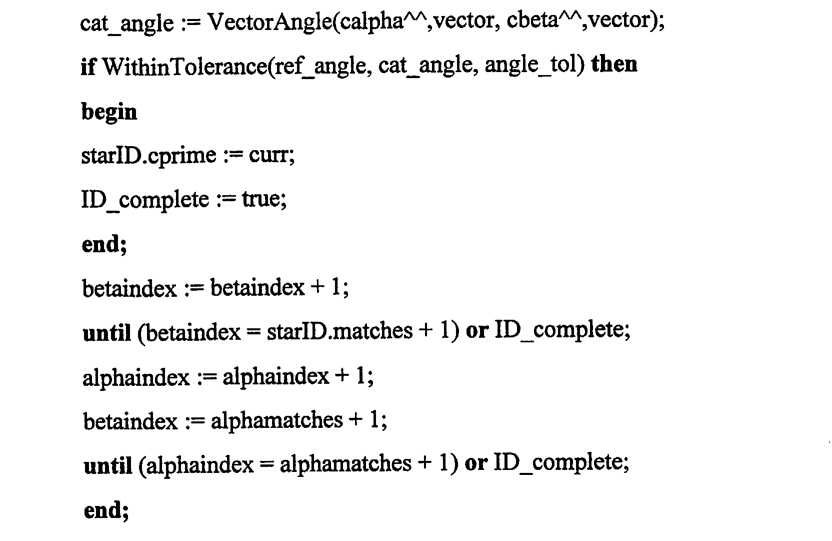

If a match is not found in the catalog with the current prime, try the next star in the list as prime and repeat the I.D. cycle. Once you have exhausted all the prime candidates, give up and take another frame of data with the star camera:

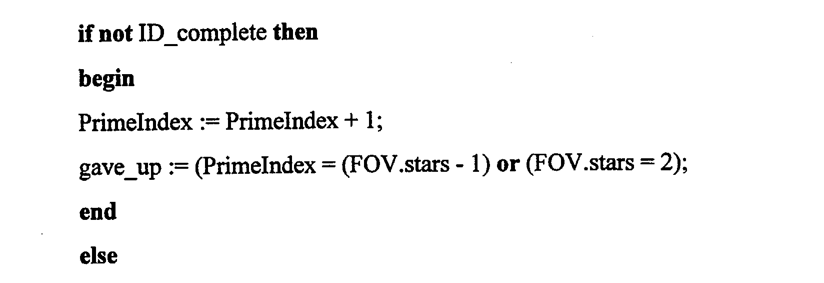

If I.D. is successful, then calculate attitude of the spacecraft.

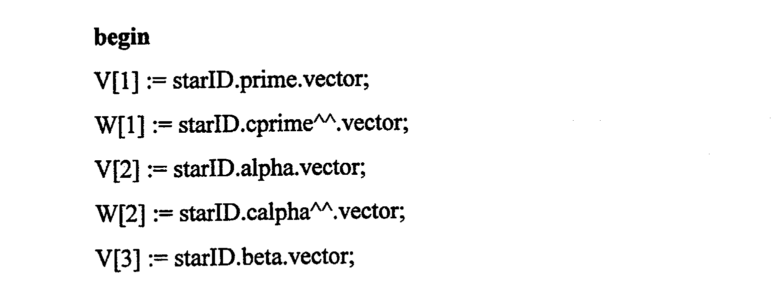

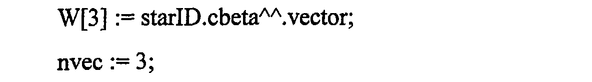

At this point, weighing factors are entered into and taken into account camera error characteristics:

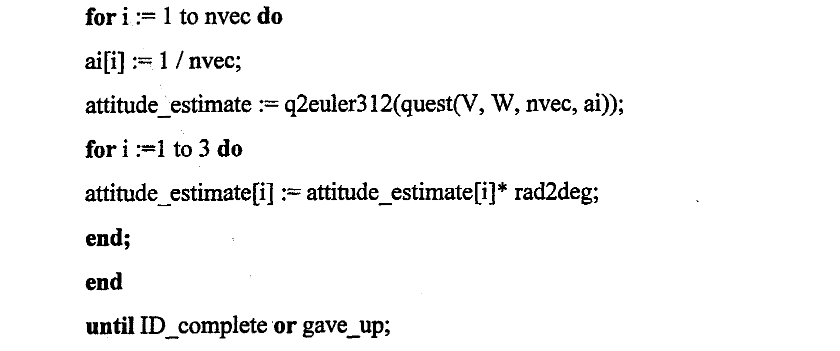

The identification and attitude adjusting process is now complete.

The star database can also be used to track the position of stars. In this mode, the attitude of the spacecraft and star camera is already known, and stars are selected which are supposed to appear in the camera's FOV. After the stars are selected, the master record 50 points to the first star in right ascension which should appear in the FOV. By moving up through the database according to right ascension, the predicted position of the selected stars can be compared against the observed position of the stars. If the data appears valid (e.g. no earth or moon intrusions) the observation error between the observed and stored information is calculated and sent to the attitude/navigation processor 40 for a stellar update. By including right ascension information in the star database, a quick and efficient search can be made for the stars which should appear in the FOV.

The identification and attitude adjusting process is now complete.

The applicant does not intend to limit the invention through the foregoing description, but instead define the invention through the claims dependent hereto.

## Claims

1. A method of compiling a star location database comprising the steps of:
a) providing a catalog of selected stars which contains a plurality of predetermined features of each of the selected stars;
b) providing a set of criteria for eliminating particular stars within the catalog;
c) eliminating a portion ofthe selected stars in the star location database according to the criteria provided;
d) establishing a plurality of bi-directional data pointers between the selected stars in the catalog according to ascending and descending magnitudes of each of the predetermined features;
e) establishing data pointers between the selected stars of the lowest magnitude of the predetermined features and the selected stars of the highest magnitude ofthe predetermined features so that said data pointers provide a circular link between the selected stars according to the relative magnitudes of the predetermined features.

2. The method of claim 1 comprising the step of establishing a plurality of the bi-directional data pointers between each of the selected stars and other selected stars in the catalog which are close in apparent location.

3. The method of Claim 1 or 2 wherein the predetermined features include brightness, right ascension, and/or position of the selected stars.

4. The method of one of the preceding claims wherein the criteria for eliminating particular stars include stars below a predetermined usual magnitude.

5. The method of one of the preceding claims wherein the criteria for eliminating particular stars includes the exclusion of nebular, binary and variable stars.

## Patentansprüche

1. Verfahren zum Erstellen einer Sternorts-Datenbank mit den Schritten:
a) Bereitstellen eines Katalogs ausgewählter Sterne, welcher mehrere vorgegebene Merkmale jedes Sterns enthält;
b) Vorgabe einer Gruppe von Kriterien zum Eliminieren bestimmter Sterne im Katalog;
c) Eliminieren eines Teils der ausgewählten Sterne in der Sternorts-Datenbank entsprechend den vorgegebenen Kriterien;
d) Einführen mehrerer Doppelrichtung-Datenhinweisadressen zwischen den ausgewählten Sternen im Katalog entsprechend ansteigender und abfallender Werte jedes der vorgegebenen Merkmale;
e) Einführen von Datenhinweisadressen zwischen den ausgewählten Sternen mit den niedrigsten Werten der vorgegebenen Merkmale und den ausgewählten Sternen mit den höchsten Werten der ausgewählten Merkmale, so daß die Datenhinweisadressen eine kreisförmige Verbindung zwischen den ausgewählten Sternen entsprechend den relativen Werten der vorgegebenen Merkmale liefern.

2. Verfahren nach Anspruch 1 mit dem Schritt der Einführung von mehreren der Doppelrichtungs-Datenhinweisadressen zwischen jedem der ausgewählten Sterne und anderen Sternen im Katalog, die dem anscheinenden Ort nahe sind.

3. Verfahren nach Anspruch 1 oder 2, bei dem die vorgegebenen Merkmale die Helligkeit, die Rektaszension und/oder die Position der ausgewählten Sterne umfassen.

4. Verfahren nach einem der vorangehenden Ansprüche, bei dem die Kriterien für das Eliminieren bestimmter Sterne die Sterne unterhalb einer vorgegebenen üblichen Größe umfassen.

5. Verfahren nach einem der vorangehenden Ansprüche, bei dem die Kriterien für das Eliminieren bestimmter Sterne den Ausschluß nebelöser, Zwillings- und variabler Sterne einschließen.

## Revendications

1. Procédé de compilation d'une base de données de localisation d'étoiles comprenant les étapes consistant à :
a) procurer un catalogue d'étoiles sélectionnées qui contient une pluralité de caractéristiques prédéterminées de chacune des étoiles sélectionnées,
b) procurer un ensemble de critères destinés à-éliminer des étoiles particulières dans le catalogue,
c) éliminer une partie des étoiles sélectionnées dans la base de données de localisation d'étoiles selon les critères procurés,
d) établir une pluralité de pointeurs de données bidirectionnels entre les étoiles sélectionnées dans le catalogue conformément aux amplitudes croissantes et décroissantes de chacune des caractéristiques prédéterminées,
e) établir des pointeurs de données entre les étoiles sélectionnées présentant l'amplitude la plus faible des caractéristiques prédéterminées et les étoiles sélectionnées présentant l'amplitude la plus élevée des caractéristiques prédéterminées de sorte que lesdits pointeurs de données procurent un chaînage circulaire entre les étoiles sélectionnées conformément aux amplitudes relatives des caractéristiques prédéterminées.

2. Procédé selon la revendication 1, comprenant l'étape consistant à établir une pluralité des pointeurs de données bidirectionnels entre chacune des étoiles sélectionnées et d'autres étoiles sélectionnées dans le catalogue, qui présentent une localisation apparente proche.

3. Procédé selon la revendication 1 ou 2, dans lequel les caractéristiques prédéterminées comprennent la luminosité, l'ascension droite, et/ou la position des étoiles sélectionnées.

4. Procédé selon l'une des revendications précédentes, dans lequel les critères destinés à éliminer des étoiles particulières comprennent les étoiles qui sont au-dessous d'une magnitude visuelle prédéterminée.

5. Procédé selon l'une des revendications précédentes, dans lequel les critères destinés à éliminer des étoiles particulières comprennent l'exclusion des étoiles à nébuleuse, binaires et variables.
